# EUROPEAN PATENT SPECIFICATION

(11) **EP 4 476 474 B1**
(45) Date of publication and mention of the grant of the patent: **10.09.2025**
(21) Application number: 24732368.6
(22) Date of filing: 03.06.2024
(51) Int. Cl.: F16L 55/168, F16L 58/16

(54) **A METHOD FOR RESTORATION OF THE INSULATION OF A PIPELINE**
VERFAHREN ZUR WIEDERHERSTELLUNG DER ISOLIERUNG EINER ROHRLEITUNG
PROCÉDÉ DE RESTAURATION DE L'ISOLATION D'UNE CANALISATION

(30) Priority: 11.12.2023 LV 230132
(43) Date of publication of application: 18.12.2024
(73) Proprietor: "KR15T5" UNIPESSOAL LDA FILIALE, 2167 Marupe, Marupes nov. (LV)
(72) Inventor: KRUMPANS, Krists, 2167 Marupe, Marupes nov. (LV)
(74) Representative: Kromanis, Artis
(86) International application number: PCT/LV2024/050006
(87) International publication number: WO 2024/177492

(56) References cited:
- US-A- 5 348 801
- US-A- 5 632 307
- US-A1- 2018 274 106
- US-A1- 2022 154 870

## Description

### Field of the invention

The present invention relates to a method for restoration of the insulation of pipelines, of gas pipelines buried underground in particular.

### Background of the invention

The German patent application publication No. DE4404473 discloses a method for restoration of pipelines in which cleaning of a pipeline is conducted with ultrasound, and restoration of the insulation is carried out using a viscous synthetic material comprising fibreglass particles. A similar method for restoration of pipelines is disclosed in the International patent application publication No. WO9808019, the US patent publicationNo. US5,348,801 and the US patent publication No. 5,632,307.

There are also methods for restoration of pipeline insulation known, in which the old insulation is removed from the restorable pipeline, it is then primed with a petroleum products-containing primer. Afterwards the pipeline is insulated using two separate tapes, forming a two-tape insulation. Said method is labour-consuming and further comprises utilization of petroleum products which during restoration of the insulation enter the surrounding environment. Thus, the method is not environment-friendly, i.e., it is polluting.

The aim of the invention is to evade the above-mentioned complications of the prior art.

### Summary of the invention

The aim of the invention is achieved through creation of a method for restoration of the insulation of a gas pipeline buried underground with a reduced labour input and a reduced negative impact on the surrounding environment, i.e., with a reduced pollution. Such a method is defined in claim 1.

The created method comprises the following steps. Step one is digging up of the pipeline. Digging up of the pipeline is conducted in such a manner that the outer surface of the pipeline can be accessed from all sides so that the further restoration steps of the pipeline insulation can be carried out. The next step is the primary cleaning of the pipeline comprising removal of the old insulation from the outer surface of the pipeline. The old insulation is removed using mechanical means, e.g., it is torn off, cut off or removed in any other mechanical way. Once the old insulation is removed, the secondary cleaning of the pipeline is conducted till the degree of cleanliness of the outer surface of the pipeline is reached that is not lower than ST/SA2 according to ISO 8501-1 or even ST2/SA2½ according to ISO 8501-1. The degree of cleanliness depends on the requirements set regarding cleanliness of the outer surface of the pipeline. Cleaning of the outer surface of the pipeline is followed by restoration of its insulation. Restoration of the insulation of the pipeline comprises wrapping of the insulation and protection tape spirally around the cleaned outer surface of the pipeline. Besides, wrapping of the insulation and protection tape spirally is carried out with overlapping which falls within the range of 60 to 75 %, preferably around 67 %. Moreover, the restoration of the insulation of the pipeline is conducted exclusively without a primer, which allows to implement restoration of the insulation without environmentally harmful substances. Primers include petroleum products, which are harmful for the environment. The present invention does not use any primers. The final method step is burying of the newly insulated pipeline.

The secondary cleaning of the pipeline is implemented through at least three cleaning methods. The secondary cleaning can be conducted using sand blasting cleaning means, dry ice cleaning means or high-pressure water jet cleaning means respectively.

The thickness of the insulation and protection tape utilized in the process of restoration of the insulation of the pipeline falls within the range from 1.3 to 2.5 mm. The respective thickness allows to provide the required protection against pipeline corrosion as well as the required protection against mechanical damage of the pipe, preserving convenience of tape wrapping at the same time. In combination with an overlap of 60%-75% and with a tape thickness from 1.3 mm to 2.5 mm an optimum of damage and corrosion protection is achieved without wasting tape material. In addition this allowed to restore the insulation of the pipeline without a use of environmentally harmful primers.

Moreover, wrapping is implemented with a tape comprising at least two interconnected layers, where one layer that shall face the restorable outer surface of the pipeline is formed of a material protecting the pipeline against corrosion, and where the other layer is formed of a material protecting the pipeline against mechanical damage. The layers may be connected during their production process already, using the co-extrusion technique.

One solution of the exploitable tape can be a tape formed by four co-extruded layers. Said layers further comprise adhesive layers covering both sides so that the tape sticks to the outer surface of the pipe and also sticks together with the layers of the spirally-wrapped tape. A first layer that shall face the restorable surface of the pipe or the pipeline is the inner adhesive layer, and a second layer is the intermediate layer protecting the pipeline against corrosion, a third layer is the supporting layer as the layer protecting the pipeline against mechanical damage, and a fourth layer is the outer adhesive layer respectively.

The material of the adhesive layer as well as of the layer protecting the pipeline against corrosion and mechanical impact is selected from the materials disclosed in prior art. For example, butyl rubber adhesive, can be selected as the adhesive layer. The layers protecting the pipeline against corrosion and mechanical impact, in their turn, can be selected from the group comprising butyl rubber, polyethylene, polyisobutylene or combinations thereof, or similar materials.

In one of the embodiments of the invention the tape intended for wrapping comprises the inner adhesive layer together with the intermediate layer, protecting the pipeline against corrosion, with a thickness from 0.8 mm to 1.0 mm, and the supporting layer in the form of a polyethylene film with a thickness from 0.35 to 0.4 mm, and the outer adhesive layer with a thickness from 0.06 to 0.1 mm.

### Brief description of the drawings

The drawings illustrate through examples various embodiments of the invention falling within the scope of the invention as defined by the claims.

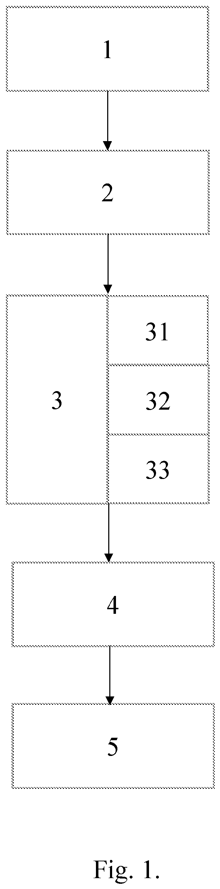

Fig. 1 illustrates a block scheme of the method for restoration of the insulation of a pipeline.

### Detailed description of the embodiments

The embodiments of the invention are described with reference to figures to illustrate the objectives, the advantages and efficiency of the present invention.

Fig. 1 illustrates a block scheme of the method for restoration of the insulation of a pipeline. The method for restoration of the insulation of a gas pipeline buried underground comprises the following steps: - digging up of the pipeline (1); - primary cleaning of the pipeline (2), which includes removal of the old insulation; - secondary cleaning of the pipeline (3) till the degree of cleanliness of the outer surface of the pipeline is reached that is not lower than ST/SA2 according to ISO 8501-1. Besides, the secondary cleaning of the pipeline (3) can be conducted using one of three cleaning processes, i.e., sand blasting cleaning (31), dry ice cleaning (32) or high-pressure water jet cleaning (33). The next step after the secondary cleaning of the pipeline (3), till the required degree of cleanliness is reached, is restoration of the insulation of the pipeline (4), which includes wrapping of the insulation and protection tape spirally around the cleaned outer surface of the pipeline, wherein wrapping of the insulation and protection tape spirally is carried out with overlapping which falls within the range of 60 to 75 %, preferably around 67 %. The thickness of the tape falls within the range from 1.3 to 2.5 mm. The overlap of 60%-75% in combination with a tape thickness from 1.3 mm to 2.5 mm achieves an optimum of damage and corrosion protection without wasting tape material. Moreover, it must be pointed out that restoration of the insulation of the pipeline (4) is conducted without a primer, which comprises petroleum products and is therefore an environmentally-harmful process and material. After restoration of the insulation of the pipeline (4), without the use of the environmentally-harmful primer, the respective pipeline is buried (5).

While the object of the invention may be susceptible to various modifications and alternative forms, it should be understood that the invention is not intended to be limited to the particular forms disclosed herein. Rather, the invention includes all the modifications and alternatives falling within the scope of the object of the invention as defined by the claims.

## Claims

1. A method for restoration of the insulation of a gas pipeline buried underground, wherein the method comprises the following steps:
- digging up of the pipeline (1);
- primary cleaning of the pipeline (2), which includes removal of the old insulation;
- secondary cleaning of the pipeline (3) till the degree of cleanliness of the outer surface of the pipeline is reached that is not lower than ST/SA2 according to ISO 8501-1, wherein the secondary cleaning of the pipeline (3) is conducted using sand blasting cleaning (31), dry ice cleaning (32) or high-pressure water jet cleaning (33);
- restoration of the insulation of the pipeline (4), which includes wrapping of an insulation and protection tape spirally around the cleaned outer surface of the pipeline, wherein wrapping of the insulation and protection tape spirally is carried out with overlapping, wherein restoration of the insulation of the pipeline (4) is conducted without a primer, and
- burying (5) of the pipeline with the restored insulation,
**characterized in that** the overlapping falls within the range of 60 to 75 %, preferably around 67 %, and the thickness of the insulation and protection tape falls within the range from 1.3 to 2.5 mm.

2. The method according to claim 1, wherein the restoration of the insulation of the pipeline (4), which includes wrapping of the insulation and protection tape, is implemented with the insulation and protection tape comprising at least two interconnected layers, where one layer that shall face the restorable outer surface of the pipeline is formed of a material protecting the pipeline against corrosion, and where the other layer is formed of a material protecting the pipeline against mechanical damage.

3. The method according to claim 1 or 2, wherein the restoration of the insulation of the pipeline (4), which includes wrapping of the insulation and protection tape, is implemented with the insulation and protection tape that is formed by four co-extruded layers, where a first layer that shall face the restorable surface of the pipe or the pipeline is the inner adhesive layer, a second layer is the intermediate layer protecting the pipeline against corrosion, a third layer is the supporting layer as the layer protecting the pipeline against mechanical damage, and a fourth layer is the outer adhesive layer.

4. The method according to any of claims 1 to 3, wherein the secondary cleaning of the pipeline (3) is conducted till the degree of cleanliness is reached that is not lower than ST2/SA2½ according to ISO 8501-1.

5. The method according to claim 3, wherein the thickness of the outer adhesive layer of the insulation and protection tape is from 0.08 mm, and the thickness of the inner adhesive layer together with the layer protecting the pipeline against corrosion is from 0.84 mm.

6. The method according to 3 or 5, the supporting layer of the insulation and protection tape is a polyethylene film with a thickness from 0.38 mm.

## Patentansprüche

1. Verfahren zur Wiederherstellung der Isolierung einer unterirdisch verlegten Gasleitung, wobei das Verfahren die folgenden Schritte umfasst:
- Ausgraben der Leitung (1);
- Primäre Reinigung der Leitung (2), einschließlich Entfernung der alten Isolierung;
- Sekundäre Reinigung der Rohrleitung (3), bis der Reinheitsgrad der Außenfläche der Rohrleitung mindestens ST/SA2 gemäß ISO 8501-1 erreicht ist, wobei die sekundäre Reinigung der Rohrleitung (3) mittels Sandstrahlreinigung (31), Trockeneisreinigung (32) oder Hochdruckwasserstrahlreinigung (33) durchgeführt wird;
- Wiederherstellung der Isolierung der Rohrleitung (4), die das spiralförmige Umwickeln der gereinigten Außenfläche der Rohrleitung mit einem Isolier- und Schutzband umfasst, wobei das spiralförmige Umwickeln mit dem Isolier- und Schutzband überlappend erfolgt,
wobei die Wiederherstellung der Isolierung der Rohrleitung (4) ohne Grundierung erfolgt, und
- Vergraben (5) der Rohrleitung mit der wiederhergestellten Isolierung,
**dadurch gekennzeichnet, dass** die Überlappung im Bereich von 60 bis 75 %, vorzugsweise um 67 %, liegt und die Dicke des Isolier- und Schutzbandes im Bereich von 1,3 bis 2,5 mm liegt.

2. Verfahren nach Anspruch 1, wobei die Wiederherstellung der Isolierung der Rohrleitung (4), die das Umwickeln mit dem Isolier- und Schutzband umfasst, mit dem Isolier- und Schutzband durchgeführt wird, das mindestens zwei miteinander verbundene Schichten umfasst, wobei eine Schicht, die der wiederherstellbaren Außenfläche der Rohrleitung zugewandt ist, aus einem Material gebildet ist, das die Rohrleitung vor Korrosion schützt, und wobei die andere Schicht aus einem Material gebildet ist, das die Rohrleitung vor mechanischer Beschädigung schützt.

3. Verfahren nach Anspruch 1 oder 2, wobei die Wiederherstellung der Isolierung der Rohrleitung (4), die das Umwickeln der Isolierung und des Schutzbands umfasst, mit dem Isolier- und Schutzband durchgeführt wird, das aus vier coextrudierten Schichten gebildet ist, wobei eine erste Schicht, die der wiederherstellbaren Oberfläche des Rohrs oder der Rohrleitung zugewandt ist, die innere Klebeschicht ist, eine zweite Schicht die Zwischenschicht ist, die die Rohrleitung vor Korrosion schützt, eine dritte Schicht die Trägerschicht als Schicht ist, die die Rohrleitung vor mechanischen Beschädigungen schützt, und eine vierte Schicht die äußere Klebeschicht ist.

4. Verfahren nach einem der Ansprüche 1 bis 3, wobei die sekundäre Reinigung der Rohrleitung (3) so lange durchgeführt wird, bis ein Reinigungsgrad erreicht ist, der nicht unter ST2/SA2½ gemäß ISO 8501-1 liegt.

5. Verfahren nach Anspruch 3, wobei die Dicke der äußeren Klebeschicht des Isolier- und Schutzbands 0,08 mm beträgt und die Dicke der inneren Klebeschicht zusammen mit der Schicht, die die Rohrleitung vor Korrosion schützt, 0,84 mm beträgt.

6. Verfahren nach 3 oder 5, wobei die Trägerschicht des Isolier- und Schutzbands eine Polyethylenfolie mit einer Dicke von 0,38 mm ist.

## Revendications

1. Procédé pour restaurer l'isolation d'une conduite de gaz enterrée, dans lequel le procédé comprend les étapes suivantes:
- déterrer la conduite (1);
- nettoyer la conduite (2) dans un premier temps, ce qui comprend l'enlèvement de l'ancienne isolation;
- nettoyage secondaire de la conduite (3) jusqu'à ce que le degré de propreté de la surface extérieure de la conduite soit au moins égal à ST/SA2 selon la norme ISO 8501-1, le nettoyage secondaire de la conduite (3) étant effectué par sablage (31), nettoyage à la glace carbonique (32) ou nettoyage au jet d'eau à haute pression (33);
- la restauration de l'isolation de la canalisation (4), qui comprend l'enroulement d'une bande isolante et protectrice en spirale autour de la surface extérieure nettoyée de la canalisation, l'enroulement de la bande isolante et protectrice en spirale étant effectué avec chevauchement,
la restauration de l'isolation de la canalisation (4) étant réalisée sans apprêt, et
- l'enfouissement (5) de la canalisation avec l'isolation restaurée,
**caractérisé en ce que** le chevauchement se situe dans une plage comprise entre 60 et 75 %, de préférence autour de 67 %, et l'épaisseur du ruban isolant et protecteur se situe dans une plage comprise entre 1,3 et 2,5 mm.

2. Procédé selon la revendication 1, dans lequel la restauration de l'isolation de la canalisation (4), qui comprend l'enroulement de la bande d'isolation et de protection, est mise en oeuvre avec la bande d'isolation et de protection comprenant au moins deux couches interconnectées, où une couche qui doit faire face à la surface extérieure restaurable de la canalisation est formée d'un matériau protégeant la canalisation contre la corrosion, et où l'autre couche est formée d'un matériau protégeant la canalisation contre les dommages mécaniques.

3. Procédé selon la revendication 1 ou 2, dans lequel la restauration de l'isolation de la canalisation (4), qui comprend l'enveloppement de l'isolation et du ruban de protection, est mise en œuvre avec le ruban d'isolation et de protection qui est formé de quatre couches coextrudées, où une première couche qui doit faire face à la surface restaurable du tuyau ou de la canalisation est la couche adhésive intérieure, une deuxième couche est la couche intermédiaire protégeant la canalisation contre la corrosion, une troisième couche est la couche de support en tant que couche protégeant la canalisation contre les dommages mécaniques, et une quatrième couche est la couche adhésive extérieure.

4. Procédé selon l'une quelconque des revendications 1 à 3, dans lequel le nettoyage secondaire de la canalisation (3) est effectué jusqu'à ce que le degré de propreté atteint ne soit pas inférieur à ST2/SA2½ selon la norme ISO 8501-1.

5. Procédé selon la revendication 3, dans lequel l'épaisseur de la couche adhésive extérieure du ruban d'isolation et de protection est comprise entre 0,08 mm et l'épaisseur de la couche adhésive intérieure avec la couche protégeant la canalisation contre la corrosion est comprise entre 0,84 mm.

6. Procédé selon la revendication 3 ou 5, dans lequel la couche de support du ruban d'isolation et de protection est un film de polyéthylène d'une épaisseur comprise entre 0,38 mm.
